# EUROPÄISCHE PATENTSCHRIFT

(11) **EP 3 931 644 B1**
(45) Veröffentlichungstag und Bekanntmachung des Hinweises auf die Patenterteilung: **27.08.2025**
(21) Anmeldenummer: 20714905.5
(22) Anmeldetag: 16.03.2020
(51) Int. Cl.: G05B 13/04

(54) **VERFAHREN ZUM TESTEN EINER ANLAGENSTEUERUNG SOWIE SIMULATIONSVORRICHTUNG**
METHOD FOR TESTING OF A SYSTEM CONTROL AND SIMULATION DEVICE
PROCÉDÉ D'ESSAI DES ESSAIS D'UNE COMMANDE D'INSTALLATION AINSI QUE DISPOSITIF DE SIMULATION

(30) Priorität: 27.03.2019 EP 19165585
(43) Veröffentlichungstag der Anmeldung: 05.01.2022
(73) Patentinhaber: Siemens Aktiengesellschaft, 80333 München (DE)
(72) Erfinder: LUTZ, Benjamin, 76327 Pfinztal (DE)
(74) Vertreter: Siemens Patent Attorneys
(86) Internationale Anmeldenummer: PCT/EP2020/057038
(87) Internationale Veröffentlichungsnummer: WO 2020/193243

(56) Entgegenhaltungen:
- WO-A2-2004/070569
- DE-A1- 10 048 360
- GB-A- 2 409 293
- US-A1- 2005 137 721
- PRATT ANNABELLE ET AL: "Hardware-in-the-loop simulation of a distribution system with air conditioners under model predictive control", 2017 IEEE POWER & ENERGY SOCIETY GENERAL MEETING, IEEE, 16 July 2017 (2017-07-16), pages 1 - 5, XP033309084, DOI: 10.1109/PESGM.2017.8273757
- PONCE CAROLINA V ET AL: "Dynamic simulator and model predictive control of an integrated solar combined cycle plant", ENERGY, ELSEVIER, AMSTERDAM, NL, vol. 109, 1 June 2016 (2016-06-01), pages 974 - 986, XP029696312, ISSN: 0360-5442, DOI: 10.1016/J.ENERGY.2016.04.129

## Beschreibung

Die vorliegende Erfindung betrifft ein Verfahren zum Testen einer Anlagensteuerung für eine verfahrenstechnische Anlage sowie eine Simulations- und Testvorrichtung zum Testen einer solchen Anlagensteuerung.

Verfahrenstechnische Anlagen wie etwa Raffinerien oder Fabriken, in denen Stoffe hinsichtlich Zusammensetzung, Art oder Eigenschaft verändert werden, können äußerst komplexe Strukturen aufweisen. Eine Anlage kann sich beispielsweise aus einer Vielzahl, gegebenenfalls miteinander vernetzter und/oder voneinander abhängiger, Komponenten wie etwa Ventilen, Sensoren, Aktuatoren und/oder dergleichen zusammensetzen. Solche Anlagen werden in der Regel durch spezielle, insbesondere computerbasierte oder zumindest computergestützte, Prozessleitsysteme geführt, welche dabei insbesondere die verfahrenstechnischen Zusammenhänge zwischen den verschiedenen Komponenten berücksichtigen können. Solche Prozessleitsysteme umfassen die Automatisierungstechnik, insbesondere Automatisierungsprogramme und Bedien- und Beobachtungsprogramme.

Solche auch als Anlagensteuerung bezeichnete Prozessleitsysteme werden häufig auf der Grundlage von einzelnen Modulen entwickelt, welche jeweils einer einzelnen Komponente der Anlage zugeordnet und zur Steuerung dieser Komponente eingerichtet sind. Ein solches Modul kann dabei als standardisierte Vorlage der Steuerungssoftware für einen Komponententyp aufgefasst werden, wobei das Modul beim Zusammensetzen des Prozessleitsystems bzw. der Anlagensteuerung entsprechend an die spezielle Ausprägung der Komponente angepasst werden muss, um eine korrekte Führung der Komponente und damit auch der gesamten Anlage zu ermöglichen.

Für gewöhnlich werden aus einzelnen Modulen entwickelte Anlagensteuerungen vor ihrem Einsatz in einer realen Anlage durch Simulation getestet, um die Funktionalität der Steuerung sicherzustellen oder gegebenenfalls zu verbessern. Dazu ist es üblicherweise notwendig, einen Satz von Eingangsgrößen für die zu testende Anlagensteuerung bereitzustellen, durch die beispielsweise der Test angestoßen wird. Im Allgemeinen wird dazu die verfahrenstechnische Anlage simuliert und von der zu testenden Anlagensteuerung geführt. Dieser Vorgang wird auch als Emulation der Anlagensteuerung bezeichnet.

Die Simulation der Anlage kann dabei auf sogenannte Simulationsmodelle gestützt werden, welche die Eingangsgrößen erzeugen. Die Simulationsmodelle müssen dabei, ebenso wie die einzelnen Steuerungsmodule zur Steuerung der Anlagenkomponenten, an die speziellen Ausprägungen der Komponenten bzw. an ihre spezielle Funktion und/oder Anordnung in der Anlage angepasst werden, und zwar insbesondere unter Berücksichtigung der durch die Anlagensteuerung umgesetzten Steuerungslogik.

Die DE 10 048 360 A1 offenbart die Verwendung von Steuerblöcken, wie etwa modellvorhersagenden und neuronalen Netzwerk-Steuerblöcken, in Prozesssteuersystemen.

In der GB 2 409 293 A ist eine adaptive, multivariable Steuerung offenbart, die einen Modellwechsel und/oder eine Parameterinterpolation im Zuge eines Modellanpassungsverfahrens durchführt.

Es ist eine Aufgabe der vorliegenden Erfindung, das Testen einer Anlagensteuerung einer verfahrenstechnischen Anlage zu verbessern, insbesondere zu vereinfachen.

Diese Aufgabe wird gelöst durch ein Verfahren zum Testen einer Anlagensteuerung für eine verfahrenstechnische Anlage sowie eine Simulations- und Testvorrichtung zum Testen einer solchen Anlagensteuerung gemäß den unabhängigen Ansprüchen.

Ein, insbesondere computerimplementiertes, Verfahren zum Testen einer Anlagensteuerung für eine verfahrenstechnische Anlage gemäß einem ersten Aspekt der Erfindung weist die folgenden Schritte auf:
(i) Bereitstellen mindestens eines vorkonfigurierten Steuerungsmoduls, welches der Steuerung einer Komponente der verfahrenstechnischen Anlage dient, wobei die verfahrenstechnische Anlage eine Mehrzahl von einzelnen Komponenten aufweist,
(ii) Erzeugen der Anlagensteuerung auf Grundlage dieses Steuerungsmoduls,
(iii) Simulieren der Steuerung der verfahrenstechnischen Anlage durch die erzeugte Anlagensteuerung,
   wobei wenigstens ein Wert eines Eingangsparameters der Anlagensteuerung durch ein komponentenspezifisches Simulationsmodell vorgegeben wird,
   und wobei das komponentenspezifische Simulationsmodell im vorkonfigurierten Steuerungsmodul enthalten ist,
(iv) Verwenden der simulierten Steuerung zum Testen der verfahrenstechnischen Anlage,

Das Verfahren ist dadurch gekennzeichnet,
dass eine von mehreren Varianten des vorkonfigurierten Steuerungsmoduls bereitgestellt wird, jede dieser Steuerungsmodulvarianten bereits ein komponentenspezifisches Simulationsmodell enthält und das im Steuerungsmodul enthaltene komponentenspezifische Simulationsmodell an die bereitgestellte Variante angepasst wird,
und dass das im Steuerungsmodul enthaltene komponentenspezifischen Simulationsmodell an physikalische Eigenschaften der Komponente der Anlage angepasst wird,
und dass wenigstens ein innerhalb des Steuerungsmoduls vom komponentenspezifischen Simulationsmodell vorgegebener Wert das mindestens eine bereitgestellte Steuerungsmodul zur simulierten Steuerung der Komponente der Anlage veranlasst.

Eine Simulations- und Testvorrichtung zum Testen einer Anlagensteuerung für eine verfahrenstechnische Anlage gemäß einem zweiten Aspekt der Erfindung ist dazu eingerichtet, das Verfahren gemäß dem ersten Aspekt der Erfindung auszuführen.

Ein Aspekt der Erfindung basiert auf dem Ansatz, Steuerungsmodule, z.B. in Form von modularer Steuerungssoftware, welche der Steuerung jeweils einer Komponente einer verfahrenstechnischen Anlage dienen, und Simulationsmodelle, anhand denen diese Komponenten simuliert werden können, zusammenzufassen. Ein Simulationsmodell zur Simulation einer Anlagenkomponente ist dabei in ein Steuerungsmodul zur Steuerung dieser Anlagenkomponente integriert. Dadurch kann ein zur Gesamtsimulation der Anlage benötigtes Simulationsmodell bereits durch das Bereitstellen des Steuerungsmoduls der entsprechenden Komponente bereitgestellt, d.h. zum Beispiel unmittelbar zugänglich gemacht, werden.

Vorzugsweise wird die Konfiguration des Steuerungsmoduls dabei vom Simulationsmodell übernommen, d.h. das im Steuerungsmodul enthaltene Simulationsmodell kann z.B. in gleicher Weise wie das Steuerungsmodul bereits an eine spezielle Ausprägung einer Komponente der Anlage angepasst, d.h. entsprechend vorkonfiguriert, sein. Dadurch kann auf eine zusätzliche manuelle, gegebenenfalls aufwändige, Anpassung des Simulationsmodells an den Aufbau der Anlage und/oder der Anlagensteuerung zu einem späteren Zeitpunkt, etwa unmittelbar vor dem Ausführen der Simulation, verzichtet werden.

Beispielsweise können in einer Planungsphase, in welcher die verfahrenstechnische Anlage bzw. deren Aufbau grundlegend konzipiert, z.B. die benötigten Komponenten zusammengestellt werden, die Komponententypen und gegebenenfalls auch bereits spezielle Eigenschaften dieser Typen festgelegt und das entsprechende Steuerungsmodul unter Berücksichtigung des Komponententyps bzw. der Eigenschaften vorkonfiguriert werden. Es ist z.B. denkbar, eine Anzahl von Ventilen, gegebenenfalls sogar von speziellen Ventiltypen, einzuplanen und entsprechende Steuerungsmodule zu konfigurieren. Da die Simulationsmodelle dieser Ventile bzw. Ventiltypen vorzugsweise in den Steuerungsmodulen enthalten sind, besteht eine klare Zuordnung der Simulationsmodelle zu diesen Ventilen bzw. Ventiltypen, insbesondere zu deren Funktion und Anordnung in der verfahrenstechnischen Anlage. Dies kann eine Anpassung der Steuerungsmodelle erleichtern.

Während des Tests der Anlagensteuerung können die Simulationsmodelle dann, insbesondere ohne weitere Anpassungen, direkt eingesetzt werden, um Werte für Eingangsparameter der Anlagensteuerung, insbesondere der einzelnen Steuerungsmodule, aus denen sich die Anlagensteuerung zusammensetzt, zu liefern.

Diese komponentenspezifischen Simulationsmodelle werden erfindungsgemäß bereits vor dem Erstellen der Anlagensteuerung auf Basis der Steuerungsmodule vorkonfiguriert.

Die Integration eines Simulationsmodells in ein Steuerungsmodul derselben Komponente kann außerdem den Vorteil haben, dass vom Simulationsmodell vorgegebene Werte für Eingangsparameter des Steuerungsmoduls bzw. der Anlagensteuerung innerhalb des Steuerungsmoduls selbst, d.h. vertraulich, erzeugt, insbesondere berechnet, werden können. Damit ist es möglich, Signalpfade bzw. Strukturen zur Datenübergabe innerhalb der Simulation zu vereinfachen und die Fehleranfälligkeit zumindest zu verringern.

Wenigstens ein innerhalb des Steuerungsmoduls vom komponentenspezifischen Simulationsmodell vorgegebener Wert veranlasst das mindestens eine bereitgestellte Steuerungsmodul zur simulierten Steuerung der Komponente der Anlage. Bei dem vorgegebenen Wert für einen Eingangsparameter der Anlagensteuerung bzw. des Steuerungsmoduls handelt es sich dabei in bevorzugter Weise um einen internen Wert, der vorzugsweise nur innerhalb des Steuerungsmoduls verarbeitet wird. Dadurch ist das Steuerungsmodul in der Lage, im Rahmen der Simulation durch Selbstreferenzierung zu arbeiten, was den Aufwand bei der Erzeugung der von der Anlagensteuerung geführten Simulation zum Testen der Anlagensteuerung verringert.

Das komponentenspezifische Simulationsmodell kann insbesondere einen internen Wert als ein vom Steuerungsmodul aufnehmbares Signal bereitstellen, um dieses zu stimulieren, d. h. z.B. zur Steuerung der Komponente zu veranlassen. Dabei ist das komponentenspezifische Simulationsmodell vorzugsweise dazu eingerichtet, Werte vorzugeben, insbesondere zu berechnen und dann auszugeben, die innerhalb eines vom Steuerungsmodul verarbeitbaren Wertebereich liegen und beispielsweise eine Stellgröße charakterisieren, die durch die aus dem mindestens einen vorkonfigurierten Steuerungsmodul zusammengesetzte Anlagensteuerung geregelt werden soll. Dadurch kann die Steuerung der Anlage durch die erzeugte Anlagensteuerung zuverlässig und fehlerfrei simuliert werden.

Zu diesem Zweck kann das Steuerungsmodul ein durch das Simulationsmodell bereitgestellte interne Schnittstelle aufweisen, durch die das Simulationsmodell mit dem Steuerungsmodul kommunizieren, d. h. Daten, zum Beispiel den wenigstens einen Wert eines Eingangsparameters der Anlagensteuerung, übermitteln bzw. übergeben kann. Beispielsweise kann anhand der internen Schnittstelle eines Ventilmodells ein Stellwert des Ventils, der zum Beispiel den Grad der Öffnung des Ventils charakterisiert, in einem Format bereitgestellt werden, welches das Steuerungsmodul beim Erzeugen eines Steuerungssignals zur simulierten Steuerung des Ventils verarbeiten kann.

Das Verfahren weist unter anderem den folgenden Schritt auf: Anpassen des im Steuerungsmodul enthaltenen komponentenspezifischen Simulationsmodells an physikalische Eigenschaften der Komponente der Anlage. Beispielsweise ist es denkbar, dass in einer Planungsphase, in der die physikalische Struktur der verfahrenstechnischen Anlage geplant wird und die einzelnen dafür benötigten Komponenten zusammengestellt werden, bereits spezielle Anforderungen an die Komponenten absehbar sind. Alternativ oder zusätzlich können solche Anforderungen auch im Rahmen einer Entwicklungsphase, in welcher die Verschaltung bzw. Logik der Komponenten aufgrund ihrer Anordnung und/oder Funktion in der Anlage entwickelt wird, ermittelt werden. Die Anpassung des Simulationsmodells an die mit den Anforderungen einhergehenden physikalischen Eigenschaften wird dabei vorzugsweise bereits in der Planungsphase und/oder Entwicklungsphase, d. h. vor dem Fertigstellen der Anlagensteuerung, durchgeführt. Dadurch wird es möglich, die auf Grundlage von Steuerungsmodulen fertig entwickelte Anlagensteuerung anhand eines Gesamtmodells der Anlage aus bereits spezialisierten Simulationsmodellen der einzelnen Komponenten zu testen, ohne dass die Simulationsmodelle im Nachhinein in aufwendiger Kleinarbeit manuell angepasst werden müssen.

Gemäß der Erfindung wird eine von mehreren Varianten des vorkonfigurierten Steuerungsmoduls bereitgestellt. Dabei wird das im Steuerungsmodul enthaltene komponentenspezifische Simulationsmodell dabei an die bereitgestellte Variante angepasst. Es kann etwa ein Ventiltyp vorkonfiguriert werden, der gemäß einer Planung der Anlage mehrfach eingesetzt wird, zum Beispiel ein Regelventil. In Abhängigkeit der Anordnung dieser Ventile ist es jedoch denkbar, dass unterschiedliche Varianten bezüglich des Stellwegs des Ventils benötigt werden, sodass entsprechend konfigurierte Varianten eines Steuerungsmoduls für ein Regelventil bereitgestellt werden. Da jede dieser Steuerungsmodulvarianten bereits ein komponentenspezifisches Simulationsmodell enthält, ist es besonders leicht, auch die Simulationsmodelle an die unterschiedlichen Stellwege anzupassen. Insbesondere kann das Risiko von Verwechslungen, zum Beispiel welches der Ventile welchen Stellweg aufweist und von welchem Steuerungsmodul gesteuert wird, verringert werden.

Die im Folgenden im Zusammenhang mit bevorzugten Ausführungsformen der Erfindung beschriebenen Merkmale sind, sofern nicht ausdrücklich ausgeschlossen oder technisch unmöglich, beliebig miteinander kombinierbar.

In einer bevorzugten Ausführungsform wird das Verhalten der Komponente der Anlage durch wenigstens einen innerhalb des Steuerungsmoduls vom komponentenspezifischen Simulationsmodell vorgegebenen Wert abgebildet. Das im Steuerungsmodul enthaltene Simulationsmodell kann zu diesem Zweck dazu eingerichtet sein, wenigstens einen Wert auf Grundlage des Verhaltens der Anlagenkomponente, insbesondere im Hinblick auf die Gesamtstruktur der Anlage, bereitzustellen. Dies ermöglicht eine präzise Simulation der Steuerung der Anlage.

Beispielsweise kann das Simulationsmodell eine Verhaltensbeschreibung der zu simulierenden Anlagenkomponente enthalten, wobei die Verhaltensbeschreibung vorzugsweise die physikalische Funktionalität der Komponente abbildet, also z.B. die Begrenzung des Durchflusses eines Fluids durch ein Ventil. Die Funktionalität kann dabei auch von Parametern abhängen, die nicht durch die Komponente selbst, sondern durch ihre Umgebung in der verfahrenstechnischen Anlage oder sogar den Betriebszustand der Anlage vorgegeben sind. Zum Beispiel kann die mögliche Begrenzung des Durchflusses eines Fluids durch ein Ventil nicht nur durch die Bauart des Ventils, insbesondere den Ventiltyp, vorgegeben sein, sondern auch von Parametern wie der Dichte des Fluids, des Fluiddrucks und/oder dergleichen. Innerhalb des Steuerungsmoduls kann das Simulationsmodell so besonders umfassende und/oder realitätsnahe Werte als Eingangsparameter für das Steuerungsmodul bereitstellen.

Es ist z.B. denkbar, dass das Simulationsmodell, beispielsweise für einen Aktuator, ein Modell, beispielsweise einer Regelstrecke, enthält, das in bevorzugter Weise durch eine mathematische Gleichung abgebildet wird. Dabei ist z.B. der Aktuator in bevorzugter Weise auf dieser Regelstrecke durch das Steuerungsmodul bzw. die Anlagensteuerung zu regeln, d.h. Informationen bezüglich der Regelstrecke können im Steuerungsmodul, z.B. durch entsprechende Vorkonfiguration, enthalten sein. Durch die Integration des Simulationsmodells in das Steuerungsmodul muss das Simulationsmodell in Bezug auf die Regelstrecke nicht zusätzlich angepasst zu werden.

In einer weiteren bevorzugten Ausführungsform hängt wenigstens ein innerhalb des Steuerungsmoduls vom komponentenspezifischen Simulationsmodell vorgegebener Wert von einer weiteren Komponente der Anlage ab, insbesondere von deren Steuerungsmodul. Insbesondere kann das Simulationsmodell dazu eingerichtet sein, den vorgegebenen Wert unter Berücksichtigung einer weiteren Anlagenkomponente bereitzustellen. Dadurch kann der verfahrenstechnische Zusammenhang, in dessen Rahmen z.B. Nachbarschaftsbeziehungen der Komponente zu einer weiteren, anderen Komponente beschrieben werden, berücksichtigt werden. Vorzugsweise kann auch die Steuerung der weiteren Komponente, insbesondere in Form der durch deren Steuerungsmodul umgesetzte Steuerungslogik, berücksichtigt werden.

Beispielsweise kann das Simulationsmodell eines Reglers, durch den ein Aktuator angesteuert wird, an die Steuerung bzw. das Steuerungsmodul des Aktuators, insbesondere während der Konfiguration des Steuerungsmoduls, angepasst werden. Vorzugsweise enthält das Simulationsmodell des Reglers dabei Informationen bezüglich Parameter des Steuerungsmoduls des Aktuators oder hat zumindest Zugriff darauf. Der Regler kann daher in einer speziell an den Motor angepassten Form simuliert werden.

Die Berücksichtigung weiterer Komponenten, insbesondere von Parametern oder Signalen der entsprechenden Steuerungsmodule, erlaubt es dabei insbesondere, anhand des Simulationsmodells Werte nicht nur für Eingangsparameter des entsprechenden einzelnen Steuerungsmoduls, sondern für die gesamte Anlagensteuerung bereitzustellen.

In einer weiteren bevorzugten Ausführungsform wird innerhalb des Steuerungsmoduls wenigstens ein Wert vom komponentenspezifischen Simulationsmodell auf Grundlage eines Parameters des mindestens einen bereitgestellten Steuerungsmoduls vorgegeben. Das Simulationsmodell kann insbesondere so in das Steuerungsmodul integriert sein, dass das Simulationsmodell direkten Zugriff auf Parameter des Steuerungsmoduls hat. Beispielsweise kann das Simulationsmodell dazu eingerichtet sein, als Parameter die Faktoren eines Regelmodells, z.B. die Vorfaktoren von Termen einer PID-Regelung, oder dergleichen aus dem Steuerungsmodul zu berücksichtigen. Dadurch kann der wenigstens eine vorgegebene Wert zuverlässig von dem Steuerungsmodell verarbeitet bzw. zur Regelung der Komponente verwendet werden.

In einer weiteren bevorzugten Ausführungsform wird innerhalb des Steuerungsmoduls wenigstens ein Wert vom komponentenspezifischen Simulationsmodell auf Grundlage einer Ausgangsgröße, die das mindestens eine bereitgestellte Steuerungsmodul zur Steuerung der Komponente ausgibt, vorgegeben. Der Wert kann insbesondere auf Grundlage eines Signals zur Steuerung der Komponente, dass das Steuerungsmodul erzeugt, vorgegeben werden. Dadurch wird eine Steuerungsmodul-interne Rückkopplung in der Anlagensteuerung erzeugt, anhand der das Verhalten der Anlagensteuerung getestet werden kann.

Beispielsweise kann das Simulationsmodell dazu eingerichtet sein, Stellwerte einer Komponente, z.B. eines Ventils, die vom Steuerungsmodul als Signal an die simulierte Komponente, z.B. das Ventil, ausgegeben werden, aufzunehmen und zur Simulation einer Reaktion der Komponente, etwa des Ventils, zu verarbeiten. Vorzugsweise werden die Stellwerte oder andere Ausgangsgrößen dabei direkt aus dem Steuerungsmodul ausgelesen, wodurch die Effizienz der Simulation und damit des Tests der Anlagensteuerung erhöht werden kann. Die Ausgangsgrößen können dabei insbesondere über eine durch das Simulationsmodell bereitgestellte interne Schnittstelle des Steuerungsmoduls vom Steuerungsmodul an das Simulationsmodell übertragen werden.

In einer weiteren bevorzugten Ausführungsform wird wenigstens ein Ausgangswert einer mathematischen Funktion vom komponentenspezifischen Simulationsmodell als Wert vorgegeben. Dabei ist die mathematische Funktion in bevorzugter Weise dazu eingerichtet, die Komponente bzw. deren Verhalten zu beschreiben. Die Verwendung einer mathematischen Funktion vereinfacht die Integration des Simulationsmodells in der Steuerungsmodul bzw. erlaubt eine besonders einfache und schnelle Anpassung des Simulationsmodells innerhalb des Steuerungsmoduls. Die Funktion kann zu diesem Zweck beispielsweise mit dem Steuerungsmodul verknüpft sein, etwa mit Parametern des Steuerungsmoduls.

Die mathematische Funktion kann dabei insbesondere verschiedene Aspekte der zu simulierenden Komponente und/oder des Steuerungsmoduls zusammenfassen bzw. miteinander in Beziehung setzen, etwa in Form von mehreren Termen oder Variablen. Beispielsweise kann die mathematische Funktion als Eingangsgröße Parameter des Steuerungsmoduls wie etwa PID-Konstanten, Ausgangsgrößen des Steuerungsmoduls wie etwa einen Stellwert der Komponente und/oder Parameter bzw. Ausgangsgrößen von Steuerungsmodulen verfahrenstechnisch benachbarter Komponenten der Anlage aufnehmen und gegebenenfalls miteinander in Beziehung setzen, um ein umfassendes und realitätsnahes Verhalten der Komponente innerhalb des Steuerungsmoduls simulieren zu können.

In einer weiteren bevorzugten Ausführungsform weist das Verfahren des Weiteren den folgenden Schritt auf: Vorkonfigurieren des mindestens einen Steuerungsmoduls, wobei das im Steuerungsmodul enthaltene komponentenspezifische Simulationsmodell vorzugsweise an die Vorkonfiguration angepasst wird. Dadurch kann eine Kohärenz zwischen Steuerungsmodul und Simulationsmodell aufrechterhalten bzw. Fehler durch nicht aufeinander abgestimmte Steuerungsmodul und Simulationsmodelle vermieden oder zumindest reduziert werden.

Beispielsweise kann im Rahmen der Entwicklungsphase ein Steuerungsmodul in Anbetracht der Wechselwirkung der Komponente mit wenigstens einer weiteren, anderen Komponente in der Weise angepasst werden, dass z.B. ein Dämpfungsglied in die Steuerungslogik eingeführt wird. In Reaktion darauf kann unmittelbar eine Dämpfung in das Simulationsmodell, etwa in Form eines Dämpfungsterms in einer mathematischen Funktion, eingefügt werden.

In einer weiteren bevorzugten Ausführungsform wird das Anpassen des komponentenspezifischen Simulationsmodells automatisch durchgeführt. Dabei kann das Stimulationsmodell insbesondere automatisch durch eine Anpassung bzw. eine Vorkonfiguration des Steuerungsmoduls, z.B. an eine gewünschte Wirkung der Komponente in der Anlage, angepasst werden. Dadurch kann das Testen der Anlagensteuerung deutlich vereinfacht und effizienter durchgeführt werden.

Beispielsweise kann das Simulationsmodell, etwa in Form einer mathematischen Funktion, von Parametern abhängen, von denen auch eine vom Steuerungsmodul erzeugte Ausgangsgröße, z.B. ein Steuerungssignal, abhängt. Werden beim Vorkonfigurieren des Steuerungsmoduls diese Parameter angepasst, kann sich diese Anpassung automatisch auch auf das in das Steuerungsmodell integrierte Simulationsmodell übertragen, ohne dass eine weitere Anpassung vorgenommen werden muss.

In einer weiteren bevorzugten Ausführungsform wird das mindestens eine vorkonfigurierte Steuerungsmodul in einem generischen Format bereitgestellt, in dem das komponentenspezifische Simulationsmodell aus dem mindestens einen bereitgestellten Steuerungsmodul auslesbar und zur Erzeugung von wenigstens einem Wert für einen Parameter des Simulationsmodells durch einen Anlagensimulator nutzbar ist. Bei dem generischen Format kann es sich dabei z.B. um ein Dateiformat und/oder Datenstruktur handeln, das bzw. die durch einen Anlagensimulator, etwa eine Simulationssoftware, zugänglich ist. Das Bereitstellen der Steuerungsmodule und die Auslesbarkeit der darin enthaltenen Simulationsmodelle kann es erleichtern, eine Gesamtsimulation aus mehreren bereits konfigurierten Simulationsmodellen zu erzeugen und zum Testen der Anlagensteuerung zu verwenden.

Die vorangehend beschriebenen Eigenschaften, Merkmale und Vorteile des ersten Aspekts der Erfindung gelten auch, sofern technisch sinnvoll, für den zweiten Aspekt der Erfindung.

Die Erfindung wird im Folgenden anhand von Figuren näher erläutert. Es zeigen, zumindest teilweise schematisch:
- FIG 1: ein Beispiel eines Verfahrens zum Testen einer Anlagensteuerung für eine verfahrenstechnische Anlage; und
- FIG 2: ein Beispiel eines Steuerungsmoduls zur Steuerung einer Komponente einer Anlage mit einem Simulationsmodell der Komponente.

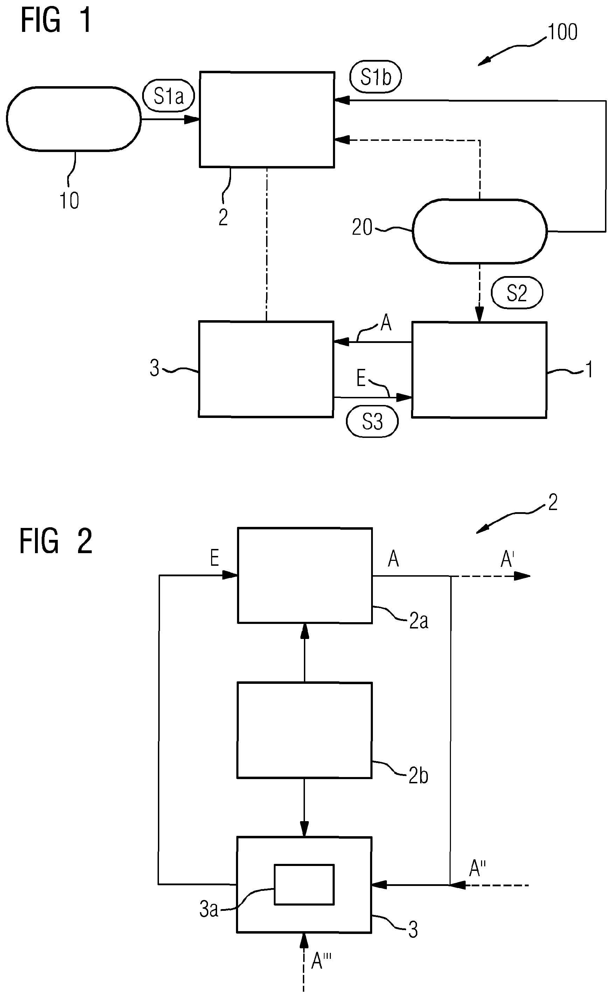

FIG 1 zeigt ein Beispiel eines, insbesondere zumindest teilweise computerimplementierten, Verfahrens 100 zum Testen einer Anlagensteuerung 1 für eine verfahrenstechnische Anlage, etwa eine Raffinerie oder eine Fabrik. Die Anlagensteuerung 1 wird dabei zumindest teilweise aus vorkonfigurierten Steuerungsmodulen 2 zusammengesetzt, die jeweils dazu eingerichtet sind, eine Komponente der Anlage, etwa ein Ventil, einen Aktuator, einen Sensor und/oder dergleichen, zu steuern, und in verschiedenen Phasen des Entwicklungsprozesses einer verfahrenstechnischen Anlage, insbesondere einer Planungsphase 10 zur Konzeption der Anlage und/oder einer Entwicklungsphase 20 zum Erstellen der Anlagensteuerung 1, nach Bedarf bereitgestellt werden können. Die Steuerungsmodule 2 enthalten dabei Simulationsmodelle 3 der Komponenten der Anlage, auf deren Grundlage die Steuerung der Anlage durch die Anlagensteuerung 1 simuliert werden kann.

Dabei werden die vorkonfigurierten Steuerungsmodule 2, zum Beispiel modular zusammensetzbare, komponentenspezifische Steuerungssoftwareeinheiten, die jeweils die Steuerungssoftware für eine Komponente der Anlage enthalten, in einem Verfahrensschritt S1a, S1b bereitgestellt. In der Planungs- und/oder Entwicklungsphase 20 können, gegebenenfalls in einem vorhergehenden Verfahrensschritt (nicht gezeigt), verschiedene Typen von Komponenten, welche die Anlage umfassen soll, definiert und beispielsweise deren Eigenschaften festgelegt werden. Beim Bereitstellen S1a, S1b der Steuerungsmodule 2 werden dann vorzugsweise jeweils verschiedene Varianten dieser vorkonfigurierten Steuerungsmodule 2 bereitgestellt, die aufgrund ihrer leicht voneinander abweichenden Konfiguration spezifische Funktionen, etwa gemäß der Anordnung der Komponenten innerhalb der Anlage, erfüllen können. Dieses Bereitstellen S1a, S1b verschiedener Varianten eines generischen Steuerungsmoduls 2 kann auch als Instanziierung bezeichnet werden.

In einem weiteren Verfahrensschritt S2 werden die Steuerungsmodule 2 zur Anlagensteuerung 1 zusammengesetzt. Dies geschieht vorzugsweise in der Entwicklungsphase 20. Dabei können die Steuerungsmodule 2 weiter spezifiziert, zum Beispiel an sich beim Erstellen der Anlagensteuerung 1 ergebende Anforderungen und/oder Abhängigkeiten verschiedener Komponenten der Anlage voneinander angepasst, werden. Insbesondere können, falls notwendig, auch weitere Steuerungsmodule 2 instanziiert werden.

Die derart erzeugte Anlagensteuerung 1 kann dann anhand eines virtuellen Modells der Anlage, d. h. im Rahmen einer Simulation, getestet werden. Die Simulation wird dabei in bevorzugter Weise auf Grundlage der Simulationsmodelle 3 der Komponenten der Anlage ausgeführt, wobei sich ein Gesamtmodell der Anlage zumindest teilweise aus den einzelnen Simulationsmodellen 3 zusammensetzt. Die Steuerung der Anlage durch die zuvor erzeugte Anlagensteuerung 1 wird in einem weiteren Verfahrensschritt S3 simuliert, wobei das Ausführen der Anlagensteuerung 1 anhand des simulierten, zumindest teilweise aus den Simulationsmodellen 3 zusammengesetzten Anlagenmodells auch als Emulation bezeichnet werden kann.

Zur Emulation der Anlagensteuerung 1 werden Werte für Eingangsparameter E der Anlagensteuerung 1 benötigt. Beispielsweise werden Messwerte eines Sensors zur Druckmessung benötigt, um ein Steuerungssignal zur Steuerung eines Ventils in Abhängigkeit der Messwerte erzeugen zu können, oder es wird der Stellwert eines Ventils benötigt, um ein Steuerungssignal für einen Aktuator in Abhängigkeit des Stellwerts erzeugen zu können. Solche Werte können im Verfahrensschritt S3 anhand des simulierten Gesamtmodells der Anlage bzw. den Simulationsmodellen 3 der einzelnen Komponenten der Anlage erzeugt und bereitgestellt werden, um von der Anlagensteuerung 1 aufgenommen und verarbeitet zu werden. Die dabei von der Anlagensteuerung 1 erzeugten Steuerungssignale für die Komponenten der Anlage oder andere Ausgangsgrößen A können ebenfalls bereitgestellt werden, um von den Simulationsmodellen 3 aufgenommen und zum Erzeugen weiterer Werte für die Eingangsparameter E der Anlagensteuerung 1 verwendet zu werden. Die somit erzeugbare Rückkopplung entspricht gerade der Simulation S3 der Steuerung der verfahrenstechnischen Anlage durch die Anlagensteuerung 1.

Dabei ist es besonders vorteilhaft, dass die Simulationsmodelle 3 in den Steuerungsmodulen 2 enthalten sind, wie durch die strichpunktierte Verbindungslinie in Figur 1 angedeutet ist. Denn dadurch können die Simulationsmodelle 3 im Wesentlichen gleichzeitig mit den Steuerungsmodulen 2, insbesondere während der Planungs- und/oder Entwicklungsphase 10, 20, vorkonfiguriert werden. Beispielsweise ist es denkbar, die Simulationsmodelle 3 direkt in dem (nicht dargestellten) Verfahrensschritt vor dem Bereitstellen S1a, S1b der Steuerungsmodule 2 zusammen mit den Steuerungsmodulen 2 zu definieren und gegebenenfalls gemäß der Funktionalität und Anordnung der entsprechenden Komponente in der Anlage analog zu den Steuerungsmodulen 2 zu spezifizieren. Dies erhöht die Effizienz des Testens der Anlagensteuerung 1, da bei einem späteren Konfigurieren der Simulationsmodelle 3, insbesondere nachdem die Anlagensteuerung 1 im Verfahrensschritt S2 bereits erstellt wurde, die Übersichtlichkeit beeinträchtigt sein kann.

Alternativ oder zusätzlich ist es auch denkbar, die Simulationsmodelle 3 beim Bereitstellen S1a, S1b der vorkonfigurierten Steuerungsmodule 2 z.B. an das jeweilige Steuerungsmodul 2 anzupassen und/oder um Aspekte zu ergänzen, die in der jeweiligen Phase 10, 20 festgelegt werden, wie etwa den verfahrenstechnischen Zusammenhang zwischen zwei Komponenten.

FIG 2 zeigt ein Beispiel eines Steuerungsmoduls 2 zur Steuerung einer Komponente einer verfahrenstechnischen Anlage, wobei das Steuerungsmodul 2 ein Simulationsmodell 3 der Komponente enthält. Das Steuerungsmodul 2 wird vorzugsweise durch eine Steuerungseinheit 2a charakterisiert, welche die Steuerungslogik realisiert, d. h. zum Beispiel Werte von Eingangsparametern E verarbeitet und auf deren Grundlage Ausgangsgrößen A, z.B. Steuerungssignale zur Steuerung der Komponente, bereitstellt. Die Steuerungseinheit 2a kann insbesondere durch Softwarecode, beispielsweise ein Skript, gebildet werden. In einer besonders bevorzugten Ausführung ist die Steuerungseinheit 2a als Signalflussplan (Continuous Function Chart, CFC) ausgebildet, mit dem auch komplexe Steuerungs- und/oder Regelungsaufgaben abgebildet bzw. umgesetzt werden können.

Das Steuerungsmodul 2 kann zudem Parameter 2b enthalten, auf deren Grundlage die, vorzugsweise generische, Steuerungslogik des Steuerungsmoduls 2, zum Beispiel der Signalflussplan, ausgeführt werden kann. Bei den Parametern 2b kann es sich etwa um Vorfaktoren einer mathematischen Funktion handeln, welche die Steuerungslogik abbildet und durch die Steuerungseinheit 2a umgesetzt ist.

Die Steuerungseinheit 2a kann beispielsweise eine Proportional-Integral-Differenzial(PID)-Regelung umsetzen, wobei drei Parameter 2b als Vorfaktoren der Proportional-, Integral- und Differenzialglieder der Regelung verwendet werden.

Während die Steuerungseinheit 2a im Rahmen des Entwicklungsprozesses der Anlagensteuerung in der Regel nicht angepasst wird, sondern generisch für einen bestimmten Komponententyp, zum Beispiel ein Ventil, ist, können die Parameter 2b in den verschiedenen Phasen des Entwicklungsprozesses angepasst werden, etwa an die beabsichtigte Wirkung der entsprechenden Komponente innerhalb der Anlage. Das Anpassen der Parameter 2b kann Teil eines Vorkonfigurierens des Steuerungsmoduls 2 sein.

Eine von der Steuerungseinheit 2a erzeugte Ausgangsgröße A, zum Beispiel in Form eines Steuerungssignals, muss nicht ausschließlich zur Steuerung der Komponente, der das Steuerungsmodul 2 zugeordnet ist, verwendet werden. Gegebenenfalls kann anhand solcher Steuerungssignale auch eine andere Komponente gesteuert werden, insbesondere wenn sie mit der Komponente, der das Steuerungsmodul 2 zugeordnet ist, in einem verfahrenstechnischen Zusammenhang steht. Es ist beispielsweise denkbar, dass ein von einer Steuerungseinheit 2a des Steuerungsmoduls 2 eines Reglers erzeugtes Steuerungssignal zur Steuerung eines Aktuators verwendet wird. Dies ist durch den gestrichelten Pfeil A' angedeutet.

Wie in Figur 2 angedeutet werden die Werte für Eingangsparameter E der Steuerungseinheit 2a in bevorzugter Weise von dem Simulationsmodell 3 innerhalb des Steuerungsmoduls 2 bereitgestellt. Dabei kann es sich beispielsweise um (simulierte) Ausgangssignale der Komponente, etwa eines Sensors, handeln, auf deren Grundlage die Steuerungseinheit 2a ein Steuerungssignal in Form eines Werts der Ausgangsgröße A erzeugen kann. Alternativ kann der Wert eines Eingangsparameters E auch einfach ein Stellwert der Komponente, zum Beispiel eines Ventils, sein, der bei der Erzeugung eines Steuerungssignals durch die Steuerungseinheit 2a berücksichtigt werden soll. Insbesondere kann der Wert eines Eingangsparameters E den (Betriebs-) Zustand der Komponente charakterisieren.

Dazu kann die Komponente, insbesondere innerhalb einer Gesamtsimulation der verfahrenstechnischen Anlage, anhand des Simulationsmodells 3 simuliert werden. Das Simulationsmodell 3 weist zu diesem Zweck vorzugsweise eine Simulationseinheit 3a auf, welche das Verhalten der Komponente abbildet, d. h. zum Beispiel Ausgangsgrößen A einer Steuerungseinheit 2a, etwa in Form von Steuerungssignalen, verarbeitet und auf deren Grundlage Werte von Eingangsparametern E bereitstellt. Die Simulationseinheit 3a kann insbesondere durch Softwarecode, beispielsweise als Skript, gebildet werden. In einer besonders bevorzugten Ausführung umfasst die Simulationseinheit 3a eine mathematische Funktion, welche das Verhalten der Komponente abbildet. Alternativ oder zusätzlich kann die Simulationseinheit 3a aber auch andere Formen von Verhaltensbeschreibungen umfassen, zum Beispiel Signalflusspläne.

Zusätzlich zu den Steuerungssignalen kann das Verhalten der Komponente auch durch äußere Einflüsse A" beeinflusst werden. Hierbei kann es sich beispielsweise um Prozessbedingungen des von der verfahrenstechnischen Anlage aufgeführten Prozesses handeln. Die Simulationseinheit 3a kann daher zum Beispiel berücksichtigen, welcher Temperatur und/oder welchem Druck die Komponente ausgesetzt ist, wie hoch der Durchfluss eines Prozessfluids ist und/oder dergleichen.

Gegebenenfalls kann die Simulationseinheit 3a auch dazu eingerichtet sein, den verfahrenstechnischen Zusammenhang mit weiteren (simulierten) Komponenten der Anlage zu berücksichtigen. Beispielsweise können bei der Simulation eines Aktuators Steuerungssignale von einem Steuerungsmodul 2 eines Reglers berücksichtigt werden. Dies ist durch den gestrichelten Pfeil A‴ angedeutet.

Vorzugsweise berücksichtigt die Simulationseinheit 3a neben Ausgangsgrößen A der Steuerungseinheit 2a in Form von Steuerungssignalen auch die Parameter 2b des Steuerungsmoduls 2, zumindest insoweit sie für die Simulation der Komponente relevant sind. Dies kann zum Beispiel der Fall sein, wenn die Komponente ein gedämpftes Verhalten zeigt und dieses gedämpfte Verhalten, welches durch einen Parameter 2b charakterisiert ist, bei der Steuerung der Komponente durch Einbeziehung dieses Parameters 2b berücksichtigt wird.

Diese Ausführungsform zeigt besonders deutlich den Vorteil eines Steuerungsmoduls 2 zur Steuerung einer Komponente, in welches das Simulationsmodell 3 der Komponente integriert ist. Dadurch, dass sowohl Steuerungseinheit 2a als auch Simulationseinheit 3a zumindest teilweise Bezug auf dieselben Parameter 2b nehmen, wird durch das Anpassen der Parameter, etwa bei einer Instanziierung Steuerungsmoduls 2 in der Entwicklungsphase mit dem Steuerungsmodul 2 gleichzeitig auch das Simulationsmodell 3 vorkonfiguriert. Ein separater, unabhängiger Anpassungsschritt des Simulationsmodells, wie er im Stand der Technik notwendig ist, kann entfallen, wodurch die Effizienz des Entwicklungsprozesses der verfahrenstechnischen Anlage, insbesondere des Testens der Anlagensteuerung, erhöht wird.

Und selbst wenn Anpassungen des Simulationsmodells 3 notwendig sind, die nicht automatisch durch eine Konfiguration des Steuerungsmoduls 2 bzw. der Steuerungseinheit 2a, z.B. eines Signalflussplans, realisiert werden, bietet die Integration des Simulationsmodells 3 in der Steuerungsmodul 2 einen Vorteil in Bezug auf die Übersichtlichkeit des Entwicklungsprozesses der Anlage, insbesondere des Testens der Anlagensteuerung. Denn dadurch, dass beim Bereitstellen beispielsweise einer Variante des vorkonfigurierten Steuerungsmoduls 2 automatisch auch ein entsprechendes Simulationsmodell 3 bereitgestellt wird, muss zum einen zu einem späteren Zeitpunkt nicht mehr ermittelt werden, wie viele Simulationsmodelle überhaupt erzeugt werden müssen, um die Emulation der Anlagensteuerung zu ermöglichen. Zum anderen wird dadurch eine leicht nachvollziehbare Zuordnung von Simulationsmodell 3 zu Steuerungsmodul 2 erzeugt.

### Bezugszeichenliste

- 1: Anlagensteuerung
- 2: Steuerungsmodul
- 2a: Steuerungseinheit
- 2b: Parameter
- 3: Simulationsmodell
- 3a: Simulationseinheit

- 10: Planungsphase
- 20: Entwicklungsphase

- 100: Verfahren

- A, A': Ausgangsgröße
- A": äußere Einflüsse
- A‴: verfahrenstechnischer Zusammenhang
- E: Wert eines Eingangsparameters

- S1a, S1b, S2, S3: Verfahrensschritte

## Patentansprüche

1. Verfahren (100) zum Testen einer Anlagensteuerung (1) für eine verfahrenstechnische Anlage, aufweisend die Schritte:
- (S1a, S1b) Bereitstellen mindestens eines vorkonfigurierten Steuerungsmoduls (2), welches der Steuerung einer Komponente der verfahrenstechnischen Anlage dient, wobei die verfahrenstechnische Anlage eine Mehrzahl von einzelnen Komponenten aufweist;
- (S2) Erzeugen der Anlagensteuerung (1) auf Grundlage dieses Steuerungsmoduls (2); und
- (S3) Simulieren der Steuerung der verfahrenstechnischen Anlage durch die erzeugte Anlagensteuerung (1),
wobei wenigstens ein Wert eines Eingangsparameters (E) der Anlagensteuerung (1) durch ein komponentenspezifisches Simulationsmodell (3) vorgegeben wird,
und wobei das komponentenspezifische Simulationsmodell (3) im vorkonfigurierten Steuerungsmodul (2) enthalten ist,
- Verwenden der simulierten Steuerung zum Testen der verfahrenstechnischen Anlage,
**dadurch gekennzeichnet, dass**
- eine von mehreren Varianten des vorkonfigurierten Steuerungsmoduls (2) bereitgestellt wird, jede dieser Steuerungsmodulvarianten bereits ein komponentenspezifisches Simulationsmodell enthält und das im Steuerungsmodul (2) enthaltene komponentenspezifische Simulationsmodell (3) an die bereitgestellte Variante angepasst wird,
- das im Steuerungsmodul (2) enthaltene komponentenspezifischen Simulationsmodell (3) an physikalische Eigenschaften der Komponente der Anlage angepasst wird, und
- wenigstens ein innerhalb des Steuerungsmoduls (2) vom komponentenspezifischen Simulationsmodell (3) vorgegebener Wert das mindestens eine bereitgestellte Steuerungsmodul (2) zur simulierten Steuerung der Komponente der Anlage veranlasst.

2. Verfahren (100) nach Anspruch 1, **dadurch gekennzeichnet, dass** durch wenigstens einen innerhalb des Steuerungsmoduls (2) vom komponentenspezifischen Simulationsmodell (3) vorgegebenen Wert das Verhalten der Komponente der Anlage abgebildet wird.

3. Verfahren (100) nach einem der vorangehenden Ansprüche,
**dadurch gekennzeichnet, dass** wenigstens ein innerhalb des Steuerungsmoduls (2) vom komponentenspezifischen Simulationsmodell (3) vorgegebener Wert von einer weiteren Komponente der Anlage abhängt.

4. Verfahren (100) nach einem der vorangehenden Ansprüche,
**dadurch gekennzeichnet, dass** innerhalb des Steuerungsmoduls (2) wenigstens ein Wert vom komponentenspezifischen Simulationsmodell (3) auf Grundlage eines Parameters (2b) des mindestens einen bereitgestellten Steuerungsmoduls (2) vorgegeben wird.

5. Verfahren (100) nach einem der vorangehenden Ansprüche,
**dadurch gekennzeichnet, dass** innerhalb des Steuerungsmoduls (2) wenigstens ein Wert vom komponentenspezifischen Simulationsmodell (3) auf Grundlage einer Ausgangsgröße (A), die das mindestens eine bereitgestellte Steuerungsmodul (2) zur Steuerung der Komponente ausgibt, vorgegeben wird.

6. Verfahren (100) nach einem der vorangehenden Ansprüche,
**dadurch gekennzeichnet, dass** wenigstens ein Ausgangswert einer mathematischen Funktion vom komponentenspezifischen Simulationsmodell (3) als Wert vorgegeben wird.

7. Verfahren (100) nach einem der vorangehenden Ansprüche, **gekennzeichnet durch** den folgenden Schritt: Vorkonfigurieren des mindestens einen Steuerungsmoduls (2), wobei das im Steuerungsmodul (2) enthaltene komponentenspezifische Simulationsmodell (3) an die Vorkonfiguration angepasst wird.

8. Verfahren (100) nach einem der vorangegangenen Ansprüche, **dadurch gekennzeichnet, dass** das Anpassen des komponentenspezifischen Simulationsmodells (3) automatisch durchgeführt wird.

9. Verfahren (100) nach einem der vorangehenden Ansprüche,
**dadurch gekennzeichnet, dass** das mindestens eine vorkonfigurierte Steuerungsmodul (2) in einem generischen Format bereitgestellt wird, in dem das komponentenspezifische Simulationsmodell (3) aus dem mindestens einen bereitgestellten Steuerungsmodul (2) auslesbar und zur Erzeugung von wenigstens einem Wert für einen Eingangsparameter (E) des Steuerungsmoduls (2) durch einen Anlagensimulator nutzbar ist.

10. Simulations- und Testvorrichtung zum Testen einer Anlagensteuerung für eine verfahrenstechnische Anlage, die dazu eingerichtet ist, ein Verfahren nach einem der vorangehenden Ansprüche auszuführen.

## Claims

1. Method (100) for testing a system control (1) for a process engineering system, having the following steps:
- (S1a, S1b) providing at least one preconfigured control module (2), which serves to control a component of the process engineering system, wherein the process engineering system has a plurality of individual components;
- (S2) generating the system control (1) on the basis of this control module (2), and
- (S3) simulating the control of the process engineering system by way of the generated system control (1), wherein at least one value of an input parameter (E) of the system control (1) is predefined by a component-specific simulation model (3),
and wherein the component-specific simulation model (3) is contained in the pre-configured control module (2),
- using the simulated control to test the process engineering system,
**characterised in that**
- one of a plurality of variants of the pre-configured control module (2) is provided, each of these control module variants already contains a component-specific simulation model and the component-specific simulation model (3) contained in the control module (2) is adapted to the provided variant,
- the component-specific simulation model (3) contained in the control module (2) is adjusted to physical properties of the component of the system, and
- at least one value predefined within the control module (2) by the component-specific simulation model (3) induces the at least one control module that has been provided (2) to simulated control of the component of the system.

2. Method (100) according to claim 1, **characterised in that** the behaviour of the component of the system is mapped by way of at least one value predefined within the control module (2) by the component-specific simulation model (3).

3. Method (100) according to one of the preceding claims, **characterised in that** at least one value predefined within the control module (2) by the component-specific simulation model (3) depends on a further component of the system.

4. Method (100) according to one of the preceding claims, **characterised in that** within the control module (2) at least one value is predefined by the component-specific simulation model (3) on the basis of a parameter (2b) of the at least one control module (2) that has been provided.

5. Method (100) according to one of the preceding claims, **characterised in that** within the control module (2) at least one value is predefined by the component-specific simulation model (3) on the basis of an output variable (A), which the at least one control module (2) that has been provided outputs for controlling the component.

6. Method (100) according to one of the preceding claims, **characterised in that** at least one output value of a mathematical function is predefined as the value by the component-specific simulation model (3).

7. Method (100) according to one of the preceding claims, **characterised by** the following step: pre-configuring the at least one control module (2), wherein the component-specific simulation model (3) contained in the control module (2) is adjusted to the pre-configuration.

8. Method (100) according to one of the preceding claims, **characterised in that** the component-specific simulation model (3) is automatically adjusted.

9. Method (100) according to one of the preceding claims, **characterised in that** the at least one pre-configured control module (2) is provided in a generic format in which the component-specific simulation model (3) can be read from the at least one control module (2) that has been provided and can be used by a system simulator for generation of at least one value for an input parameter E of the control module (2).

10. Simulation and testing device for testing a system control for a process engineering system, which is adapted to carry out a method according to one of the preceding claims.

## Revendications

1. Procédé (100) d'essai d'une commande (1) d'une installation de la technique des procédés, comportant les stades :
- (S1a, S1b) se procurer au moins un module (2) de commande préconfiguré, qui sert à la commande d'un composant de l'installation de la technique des procédés, dans lequel l'installation de la technique des procédés a une pluralité de composants individuels ;
- (S2) produire la commande (1) de l'installation sur la base de ce module (2) de commande ; et
- (S3) simuler la commande de l'installation de la technique de procédés par la commande (1) d'installation produite ;
dans lequel on donne à l'avance au moins une valeur d'un paramètre (E) d'entrée de la commande (1) d'installation par un modèle (3) de simulation spécifique au composant, et dans lequel le module (3) de simulation spécifique au composant est contenu dans le module (2) de commande préconfiguré,
- utiliser la commande simulée pour l'essai de l'installation de la technique des procédés,
**caractérisé en ce que**
- on met à disposition l'une parmi plusieurs variantes du module (2) de commande préconfigurée, chacune de ces variantes de module (2) de commande contenant déjà un modèle de simulation spécifique au composant et on adapte, à la variante mise à disposition, le modèle (3) de simulation spécifique au composant contenu dans le module de commande,
- on adapte, aux propriétés physiques du composant de l'installation, le modèle (3) de simulation spécifique au composant contenu dans le module (2) de commande, et
- au moins une valeur, donnée à l'avance par le modèle (3) de simulation spécifique au composant, provoque la commande simulée du composant de l'installation par le au moins un module (2) de commande mis à disposition.

2. Procédé (100) suivant la revendication 1, **caractérisé en ce que**, par au moins une valeur donnée à l'avance par le modèle (3) de simulation spécifique au composant dans le module (2) de commande, on représente le comportement du composant de l'installation.

3. Procédé (100) suivant l'une des revendications précédentes, **caractérisé en ce qu'**au moins une valeur, donnée à l'avance par le modèle (3) spécifique au composant dans le module (2) de commande, dépend d'un autre composant de l'installation.

4. Procédé (100) suivant l'une des revendications précédentes, **caractérisé en ce que**, dans le module (2) de commande, on donne à l'avance au moins une valeur du modèle (3) de simulation spécifique au composant sur la base d'un paramètre (2b) du au moins un module (2) de commande mis à disposition.

5. Procédé (100) suivant l'une des revendications précédentes, **caractérisé en ce que**, dans le module (2) de commande, on donne à l'avance au moins une valeur du modèle (3) de simulation spécifique au composant sur la base d'une grandeur (A) de sortie, qui donne le au moins un module (2) de commande mis à disposition pour la commande du composant.

6. Procédé (100) suivant l'une des revendications précédentes, **caractérisé en ce que** l'on donne à l'avance, comme valeur, au moins une valeur de sortie d'une fonction mathématique du modèle (3) de simulation spécifique au composant.

7. Procédé (100) suivant l'une des revendications précédentes, **caractérisé par** le stade suivant : préconfiguration du au moins un module (2) de commande, dans lequel on adapte à la préconfiguration le modèle (3) de simulation spécifique au composant contenu dans le module (2) de commande.

8. Procédé (100) suivant l'une des revendications précédentes, **caractérisé en ce que** l'on effectue automatiquement l'adaptation du modèle (3) de simulation spécifique au composant.

9. Procédé (100) suivant l'une des revendications précédentes, **caractérisé en ce que** l'on met le au moins un module (2) de commande configuré à disposition sous un format générique, dans lequel le modèle (3) de simulation spécifique au composant peut être lu à partir du au moins un module (2) de commande mis à disposition et peut être utilisé par un simulateur d'installation pour la production d'au moins une valeur d'un paramètre (E) d'entrée du module (2) de commande.

10. Dispositif de simulation et d'essai pour l'essai d'une commande d'une installation de la technique des procédés, qui est agencé pour effectuer un procédé suivant l'une des revendications précédentes.
